# EUROPÄISCHE PATENTANMELDUNG

(11) **EP 0 895 826 A2**
(43) Veröffentlichungstag der Anmeldung: **10.02.1999**
(21) Anmeldenummer: 98107466.9
(22) Anmeldetag: 23.04.1998
(51) Int. Cl.: B23K 9/10, B23K 37/00

(54) **Schweiss- oder Schneidgerät**

(30) Priorität: 04.08.1997 DE 29713876 U; 02.09.1997 DE 29715751 U
(71) Anmelder: Elektra Beckum Aktiengesellschaft, D-49716 Meppen (DE)
(72) Erfinder: Ortmann, Martin, 49716 Meppen (DE)
(74) Vertreter: Patentanwälte Gesthuysen, von Rohr, Weidener, Häckel

(57) **Zusammenfassung**

Gegenstand der Erfindung ist ein Schweißgerät, Schneidgerät od. dgl. mit einem Gehäuse 1 und darin angeordneter elektrotechnischer Ausrüstung und mit einer Bedienfläche (5) am Gehäuse (1).

Dieses Schweißgerät, Schneidgerät od. dgl. zeichnet sich daurch aus, daß die Bedienfläche (5) an einem gesonderten Bedienteil (8) angeordnet ist und
daß das Bedienteil (8) vom Gehäuse (1) abnehmbar, jedoch mit der elektrotechnischen Ausrüstung im Gehäuse (1) über ein Verbindungskabel (9) oder drahtlos steuerungstechnisch verbunden ist. Von besonderer Bedeutung ist dabei, daß das Bedienteil (8) in zwei um den Winkel von 180° gegeneinander versetzten, also rechts mit links vertauschten Positionen am Gehäuse (1) anbringbar ist. Dabei empfiehlt es sich im besonderem Maße, daß im Gehäuse (1) eine, vorzugsweise federkraftbetriebene Aufwickelvorrichtung für das Versorgungskabel (9), vorzugsweise mit Selbsthemmung und Lösetaste, vorgesehen ist.

## Beschreibung

Die Erfindung betrifft ein Schweißgerät, Schneidgerät od. dgl. mit einem Gehäuse und darin angeordneter elektrotechnischer Ausrüstung und mit einer Bedienfläche am Gehäuse.

Schweißgeräte und Schneidgeräte und vergleichbare Geräte sind aus den, professionellen und halbprofessionellen Bereich umfangreich bekannt. Man kennt MIG/MAG-Schweißgeräte, WIG-Schweißgeräte, Kompakt-Schweißanlagen, Elektroden-Schweißgeräte, Plasma-Schneidgeräte etc. (Übersichtsprospekt Elektra-Beckum "INDUSTRIE"; Prospekt Elektra Beckum "Verticon"). Wenn im nachfolgenden von Schweißgeräten stellvertretend für alle betroffenen Geräte die Rede ist, so soll das nicht einschränkend verstanden werden, meint vielmehr alle betroffenen Geräte.

Bei Schweißgeräten sind kleine und leichte Geräte bekannt, die man tragen kann. Größere und schwerere Geräte sind mit festen Fahrwerken versehen oder auf Transportwagen verfahrbar. Regelmäßig ist das Gehäuse eines solchen Schweißgerätes quaderförmig, wobei die Bedienfläche an einer Stirnseite des quaderförmigen Gehäuses angeordnet ist. Es gibt allerdings auch Schweißgeräte, die nur eingeschränkt quaderförmig sind, nämlich aufrecht stehend benutzt werden, wobei eine Stirnseite abgeschrägt ist und die abgeschrägte Fläche die Bedienfläche trägt (Elektra Beckum "Verticon" u.a.).

An der Bedienfläche von Schweißgeräten der in Rede stehenden Art befinden sich regelmäßig mindestens zwei Einstellknöpfe sowie ein Display zur Anzeige verschiedener interessierender Daten für den Schweißvorgang oder auch nur Einstellknöpfte mit entsprechender Beschriftung.

Schweißgeräte der in Rede stehenden Art sind häufig mit Hand- oder Fuß-Fernreglern ausgestattet, die über ein mehrere Meter langes Kabel mit der elektrotechnischen Ausrüstung im Gehäuse verbunden sind und eine Fernregelung des Schweißgerätes erlauben. Für den Fernregler besteht regelmäßig an der Bedienfläche ein besonderer Anschluß, an den das Verbindungskabel des Fernreglers angeschlossen werden kann. wenn man diesen benötigt. Der Fernregler kommuniziert mit der im Gerät vorhandenen, über die Bedienfläche zu bedienenden elektrischen/elektronischen Steuerung. Der Fernregler hat regelmäßig nur eine begrenzte Anzahl von Funktionen.

Der Erfindung liegt die Aufgabe zugrunde, das zuvor erläuterte bekannte Schweißgerät, Schneidgerät od. dgl. bedienungstechnisch zu verbessern.

Die zuvor aufgezeigte Aufgabe ist dadurch gelöst, daß die Bedienfläche an einem gesonderten Bedienteil angeordnet ist und daß das Bedienteil vom Gehäuse abnehmbar, jedoch mit der elektrotechnischen Ausrüstung im Gehäuse über ein Verbindungskabel oder drahtlos steuerungstechnisch verbunden ist. Erfindungsgemäß ist erkannt worden, daß man die Bedienfläche selbst nicht fest am Gehäuse anordnet und dem Schweißgerät einen zusätzlichen Fernregler zuordnet, sondern daß man eine optimale Bedienung dann erreichen kann, wenn man die Bedienfläche an einem gesonderten Bedienteil anordnet, das vom Gehäuse abnehmbar und als Fernregler einsetzbar ist. Das spart erhebliche Kosten, weil die Bedienfläche im Bedienteil selbst praktisch den Fernregler darstellt, also ein zusätzlicher Fernregler gar nicht mehr eingesetzt werden muß. Das ist im übrigen auch von den Funktionen her zweckmäßig, da damit der "Fernregler" eben alle Funktionen hat, die die Bedienfläche selbst hat.

Besondere Ausgestaltungen und Weiterbildungen des erfindungsgemäßen Schweißgerätes sind Gegenstand der Unteransprüche. Besondere Bedeutung kommt dabei dem Patentanspruch 7 zu, der auch selbständige Bedeutung hat. Die Anordnung von zwei Standflächen am Gehäuse, die im wesentlichen rechtwinklig zueinander verlaufen, hat den Vorteil, daß das Gehäuse in liegender oder stehender Stellung angeordnet werden kann. Damit ist das Schweißgerät sehr flexibel einsetzbar.

Bei der zuletzt genannten Ausführung wiederum kommt der Maßnahme ganz besondere Bedeutung zu, daß das Bedienteil in zwei um den Winkel von 180° gegeneinander versetzen, also rechts mit links vertauschten Positionen am Gehäuse anbringbar ist. Dann kann man es bei der gewohnten Bedientechnik und bei der guten Ablesbarkeit des Displays belassen.

Im folgenden wird die Erfindung anhand einer lediglich ein Ausführungsbeispiel darstellenden Zeichnung näher erläutert. In der Zeichnung zeigt
- Fig. 1: ein Ausführungsbeispiel eines erfindungsgemäßen Schweißgerätes, ausgeführt als Handgerät, in perspektivischer Ansicht,
- Fig. 2: in einer Fig. 1 entsprechenden Darstellung, das erfindungsgemäße Schweißgerät mit abgenommenem Bedienteil.

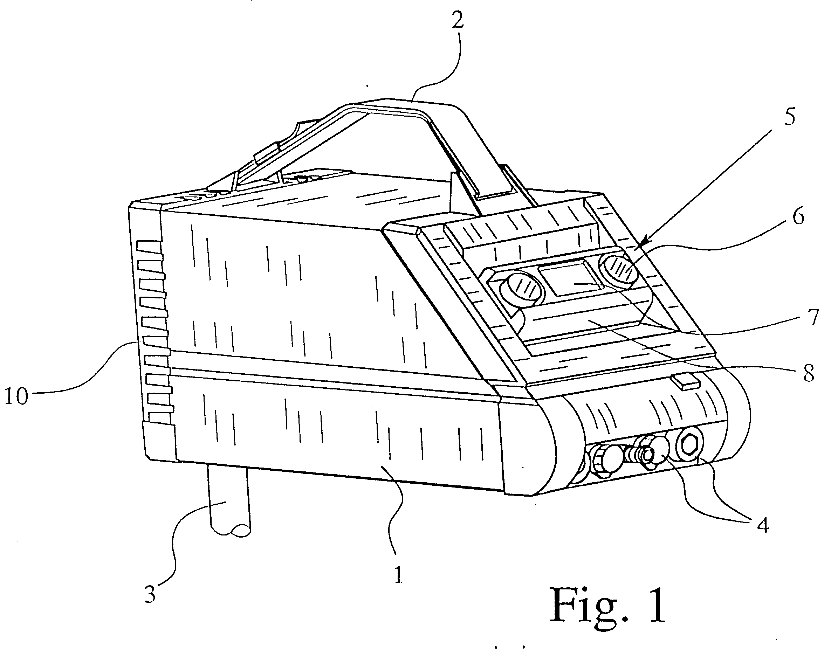

Fig. 1 zeigt in perspektivischer Ansicht ein hier als Handgerät tragbar ausgeführtes Schweißgerät mit einem Gehäuse 1, an dessen Oberseite ein Tragegriff 2 angebracht ist und von dessen Unterseite bzw. Rückseite ein Versorgungsstrang 3, enthaltend die Gas- und Stromleitungen, abgeht. Dieses Schweißgerät steht stellvertretend für alle Arten von Schweißgeräten, Schneidgeräten od. dgl., wobei hierzu auf die eingangs gemachten Ausführungen verwiesen werden darf.

Im Inneren des Gehäuses 1 dieses Schweißgerätes befindet sich die übliche elektrotechnische Ausrüstung, also einerseits die Leistungselektrik, andererseits die Steuerelektronik. Hinzu kommen Kühlvorrichtungen, evtl. ein Drahtvorschub od. dgl..

An der vorderen Stirnseite des Gehäuses 1 befinden sich unten Anschlußeinrichtungen 4 für Elektroden und Gas, jeweils dem entsprechenden Typ des Schweißgerätes entsprechend sortiert. An dieser Stirnseite des Gehäuses 1 befindet sich auch eine Bedienfläche 5 mit den erforderlichen Bedienelementen, im dargestellten Ausführungsbeispiel mit zwei Einstellknöpfen 6 und einem dazwischen angeordneten Display 7 für die Anzeige von wichtigen Funktionen und Daten. All das ist für sich aus dem Stand der Technik von Schweißgeräten und Schneidgeräten natürlich bekannt, auf diesen Stand der Technik darf verwiesen werden.

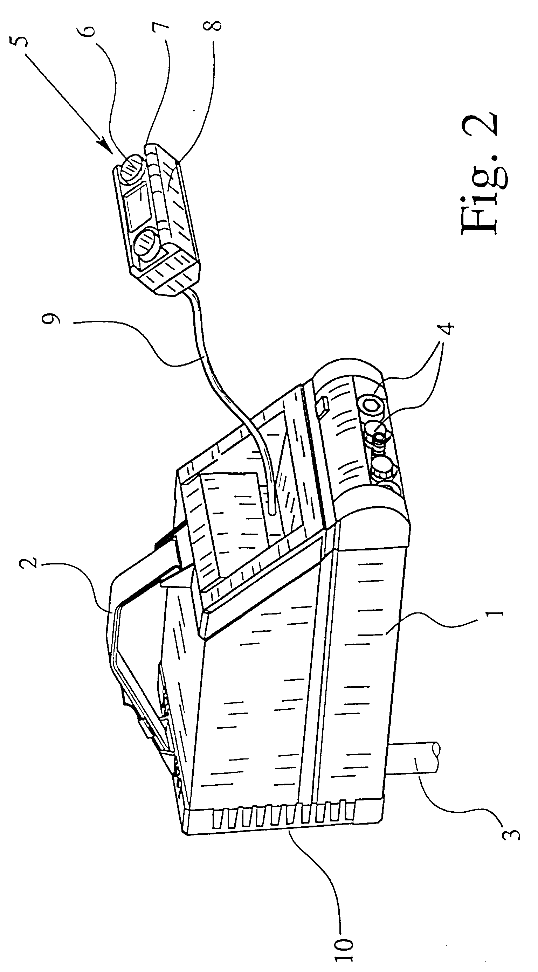

Für das Verständnis der Erfindung muß ein Vergleich von Fig. 1 mit Fig. 2 angestellt werden. Im Vergleich von Fig. 1 und Fig. 2 erkennt man, daß die Bedienfläche 5, die im Stand der Technik fester Teil des Gehäuses 1 ist, hier an einem gesonderten Bedienteil 8 angeordnet ist. Dieses Bedienteil 8 ist vom Gehäuse 1 abnehmbar, ist jedoch mit der elektrotechnischen Ausrüstung im Gehäuse 1 über ein Verbindungskabel 9 verbunden. Das Bedienteil 8 mit der Bedienfläche 5 hat also einerseits die Funktion der fest angeordneten Steuerung am Gehäuse 1 - Fig. 1 -, andererseits die Funktion eines mit allen Funktionen umfassend arbeitenden Fernreglers - Fig. 2. Als Alternative zu einem Verbindungskabel 9 ist auch eine drahtlose Verbindung denkbar, da es hier ja nicht um die Übertragung von Energie, sondern lediglich um die Übertragung von Steuersignalen an die elektrotechnische Ausrüstung des Gehäuses 1 des Schweißgerätes geht. Allerdings könnten sich die elektromagnetischen Störfelder beim Schweißen und Plasmaschneiden für eine drahtlose Übertragung als störend erweisen. Das dargestellte Ausführungsbeispiel zieht daher ein Verbindungskabel 9 vor. Beim Verbindungskabel 9 kann es sich beispielsweise auch um ein Glasfaserkabel handeln, so daß die Übertragung besonders störunanfällig ist. Im letztgenannten Fall wie im Falle der drahtlosen Übertragung muß natürlich das Bedienteil 8 eine eigenständige Stromversorgung aufweisen.
Das dargestellte Ausführungsbeispiel läßt eine weitere Variante der Erfindung nicht erkennen, der aber unter Umständen wesentliche Bedeutung zukommt. Es handelt sich dabei um die Variante, daß das Bedienteil 8 einen Kontaktsatz, insbesondere einen Kontaktsteckverbinder aufweist, der mit einem Kontaktsatz, insbesondere einem Kontaktsteckverbinder am Gehäuse 1 in Verbindung steht, wenn das Bedienteil 8 am Gehäuse 1 angebracht ist. Insbesondere für die drahtlose Verbindung ist von Bedeutung, daß in einem solchen Fall bei hergestellter Kontaktverbindung die Fernverbindung funktionslos ist.

Die Verwendung von Kontaktsätzen an Bedienteil 8 und Gehäuse 1 kann bei einer drahtlosen Verbindung oder einer Verbindung über Glasfaserkabel zusätzlich Kontakte für ein Nachladen des Energiespeichers im Bedienteil 8, also eines Akkus, umfassen.

Das dargestellte Ausführungsbeispiel zeigt, daß auch hier, wie meist im Stand der Technik, das Gehäuse 1 im Grundsatz quaderförmig, jedoch an der Seite, an der das Bedienteil 8 angeordnet ist, abgeschrägt ist, insbesondere in einem Winkel von etwa 45° Hier hat man eine vollständige Abschrägung der entsprechenden Stirnseite, an der das Bedienteil 8 sitzt, uni etwa 45°. Man könnte auch, wie im Stand der Technik eine teilweise Abschrägung, also dachartig haben.

Das dargestellte Ausführungsbeispiel zeigt, daß hier die Bedienfläche 5 bei am Gehäuse 1 angebrachtem Bedienteil 8 etwa in der oder parallel zu der Ebene der Anbringungsseite liegt. Das korrespondiert zu der Tatsache, daß bei dem hier dargestellten Ausführungsbeispiel das Bedienteil 8 nur in einer Stellung am Gehäuse 1 anbringbar ist.
Nach einer weiteren, in der Zeichnung jedoch nicht dargestellten Alternative kann man auch vorsehen, daß das Bedienteil 8 in zwei um einen bestimmten Winkel gegeneinander versetzten Positionen am Gehäuse 1 anbringbar sein kann. Insbesondere werden sich da zwei um 90° gegeneinander versetzte Positionen anbieten. Mit dieser Variante, die möglich wird, weil eben das Bedienteil 8 mit der Bedienfläche 5 von, Gehäuse 1 abnehmbar ist, kann man erreichen, daß bei gleicher Positionierung des Gehäuses 1 die Bedienfläche 5 des Bedienteils 8 einmal nach oben und ein andermal zur Seite gerichtet ist, je wie der Bediener das gerne möchte. Insoweit bringt das abnehmbare Bedienteil 8 auch für die Handhabung bei am Gehäuse 1 angebrachtem Bedienteil 8 einen erheblichen Vorteil.

Das dargestellte und insoweit bevorzugte Ausführungsbeispiel zeigt weiter, insoweit unabhängig von der zuvor erläuterten Lehre, daß am Gehäuse 1 eine der Seite mit der Bedienfläche 5 benachbarte Seite sowie die der Seite mit der Bedienfläche 5 gegenüberliegende Seite als Standflächen ausgebildet sind. Im dargestellten Ausführungsbeispiel ist die Unterseite des Gehäuses 1 die Seite mit der einen Standfläche. Die Rückseite des Gehäuses 1 ist die zweite Seite mit einer Standfläche. Dazu ist hier vorgesehen, daß die Rückseite des Gehäuses 1 mit einem Abstandsgitter 10 versehen ist. Dies trägt der Tatsache Rechnung, daß sich an sich an der Rückseite des Gehäuses 1 die Kühlvorrichtung befindet, die beim Stellen des Gehäuses 1 auf das Abstandsgitter. 10 eben nicht blockiert wird.

Bei der zuvor erläuterten Ausführungsform kommt der Abnehmbarkeit des Bedienteils 8 besondere Bedeutung zu. Dabei kommt der Anbringbarkeit des Bedienteils in zwei gegeneinander versetzten Positionen erhebliche Bedeutung zu. In der in Fig. 1 dargestellten Position würde das Bedienteil 8 wie dargestellt angebracht, der mit dem Bezugszeichen 6 bezeichnete Einstellknopf befindet sich dann rechts. In stehender, also um 90° veränderter Position, in der das Gehäuse 1 auf den, Abstandsgitter 10 steht, könnte das Bedienteil 8 in einer um 180° gegenüber der Position von Fig. 1 versetzten Position am Gehäuse 1 angebracht sein. Dann 'wäre der Einstellknopf mit dem Bezugszeichen 6 wieder rechts zu finden.

Schließlich ist im dargestellten Ausführungsbeispiel nur angedeutet, daß das Verbindungskabel 9 nicht lose in einer Aufnahme im Gehäuse 1 eingefaltet werden muß. sondern daß man vorzugsweise eine Aufwickelvorrichtung für das Verbindungskabel 9 vorsehen wird, die im Gehäuse 1 angeordnet ist und wie bei Staubsaugern bekannte Aufwickelvorrichtungen arbeiten kann.

## Patentansprüche

1. Schweißgerät, Schneidgerät od. dgl. mit einem Gehäuse (1) und darin angeordneter elektrotechnischer Ausrüstung und mit einer Bedienfläche (5) am Gehäuse (1).
**dadurch gekennzeichnet**,
daß die Bedienfläche (5) an einem gesonderten Bedienteil (8) angeordnet ist und
daß das Bedienteil (8) vom Gehäuse (1) abnehmbar, jedoch mit der elektrotechnischen Ausrüstung im Gehäuse (1) über ein Verbindungskabel (9) oder drahtlos steuerungstechnisch verbunden ist.

2. Schweißgerät, Schneidgerät od. dgl. nach Anspruch 1, dadurch gekennzeichnet daß die Bedienfläche (5) mit nur zwei Bedienelementen (6) versehen ist.

3. Schweißgerät, Schneidgerät od. dgl. nach Anspruch 1 oder 2, dadurch gekennzeichnet, daß die Bedienfläche (5) mit einem Display (7) versehen ist.

4. Schweißgerät, Schneidgerät od. dgl. nach einem der Ansprüche 1 bis 3, dadurch gekennzeichnet, daß das Bedienteil (8) einen Kontaktsatz, insbesondere einen Kontaktsteckverbinder aufweist, der mit einem Kontaktsatz, insbesondere einem Kontaktsteckverbinder am Gehäuse (1) in Verbindung steht, wenn das Bedienteil (8) am Gehäuse (1) angebracht ist, und, vorzugsweise, daß bei hergestellter Kontaktverbindung die Verbindung über das Verbindungskabel (9) oder, insbesondere, eine drahtlose Verbindung funktionslos ist.

5. Schweißgerät, Schneidgerät od. dgl. nach einem der Ansprüche 1 bis 4, dadurch gekennzeichnet, daß das Gehäuse (1) im Grundsatz quaderförmig, jedoch an der Seite. an der das Bedienteil (8) angeordnet ist, abgeschrägt ist, insbesondere in einem Winkel von etwa 45°, und, vorzugsweise, daß die Bedienfläche (5) bei am Gehäuse (1) angebrachtem Bedienteil (8) etwa in der oder parallel zu der Ebene der Anbringungsseite liegt.

6. Schweißgerät, Schneidgerät od. dgl. nach einem der Ansprüche 1 bis 5, dadurch gekennzeichnet, daß das Bedienteil (8) in zwei um einen bestimmten Winkel, vorzugsweise einen Winkel von 90° gegeneinander versetzten Positionen am Gehäuse (1) anbringbar ist.

7. Schweißgerät, Schneidgerät od. dgl. mit einem Gehäuse (1) und darin angeordneter elektrotechnischer Ausrüstung und mit einer Bedienfläche (5) am Gehäuse (1), insbesondere nach einem der Ansprüche 1 bis 6,
**dadurch gekennzeichnet**,
daß am Gehäuse (1) eine der Seite mit der Bedienfläche (5) benachbarte Seite sowie die der Seite mit der Bedienfläche (5) gegenüberliegende Seite als Standflächen ausgebildet sind.

8. Schweißgerät, Schneidgerät od. dgl. nach Anspruch 7, dadurch gekennzeichnet, daß an einer der als Standflächen ausgebildeten Seiten ein Abstandsgitter (10) angeordnet ist.

9. Schweißgerät, Schneidgerät od. dgl. nach Anspruch 7 oder 8, dadurch gekennzeichnet, daß das Bedienteil (8) in zwei um den Winkel von 180° gegeneinander versetzten, also rechts mit links vertauschten Positionen am Gehäuse (1) anbringbar ist.

10. Schweißgerät, Schneidgerät od. dgl. nach einem der Ansprüche 1 bis 10, dadurch gekennzeichnet, daß im Gehäuse (1) eine, vorzugsweise federkraftbetriebene Aufwickelvorrichtung für das Versorgungskabel (9), vorzugsweise mit Selbsthemmung und Lösetaste, vorgesehen ist.
